(19) **Europäisches Patentamt European Patent Office Office européen des brevets**

(11) **EP 4 350 549 B1**

(12) **EUROPEAN PATENT SPECIFICATION**

(45) Date of publication and mention
of the grant of the patent:
**21.01.2026 Bulletin 2026/04**

(21) Application number: **22764988.6**

(22) Date of filing: **17.02.2022**

(51) International Patent Classification (IPC):
*G06Q 10/0635* (2023.01)    *G06F 21/55* (2013.01)
*G06F 21/57* (2013.01)    *G06Q 30/018* (2023.01)
*G06Q 50/10* (2012.01)    *G06Q 50/26* (2024.01)
*H04L 9/40* (2022.01)

(52) Cooperative Patent Classification (CPC):
**G06F 21/577; G06F 21/55; G06Q 10/0635;
G06Q 30/018; G06Q 50/10; G06Q 50/26;
G06Q 50/265; H04L 63/1433**

(86) International application number:
**PCT/JP2022/006470**

(87) International publication number:
**WO 2022/249588 (01.12.2022 Gazette 2022/48)**

(54) **CALCULATOR SYSTEM AND CYBER SECURITY INFORMATION EVALUATION METHOD**

COMPUTERSYSTEM UND VERFAHREN ZUR AUSWERTUNG VON
CYBERSICHERHEITSINFORMATIONEN

SYSTÈME DE CALCULATEUR ET PROCÉDÉ D'ÉVALUATION D'INFORMATIONS DE
CYBERSÉCURITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.05.2021 JP 2021087011**

(43) Date of publication of application:
**10.04.2024 Bulletin 2024/15**

(73) Proprietor: **HITACHI, LTD.
Chiyoda-ku
Tokyo 100-8280 (JP)**

(72) Inventors:
• **CHEN Yiwen
Tokyo 1008280 (JP)**

• **KASUYA Momoka
Tokyo 1008280 (JP)**
• **YAMAZAKI Hiroki
Tokyo 1008280 (JP)**
• **HIGAKI Hiroyuki
Tokyo 1008280 (JP)**

(74) Representative: **MERH-IP Matias Erny Reichl
Hoffmann
Patentanwälte PartG mbB
Paul-Heyse-Straße 29
80336 München (DE)**

(56) References cited:
EP-A1- 3 629 207    JP-A- 2007 058 514
JP-A- 2019 191 657    US-A1- 2020 177 613
US-A1- 2021 026 968    US-A1- 2021 029 153

EP 4 350 549 B1

**Description**

The present application claims priority to Japanese Patent Application No. 2021-87011 filed on May 24, 2021.

BACKGROUND OF THE INVENTION

This invention relates to a system and a method which determine a value of cyber security information.

In recent years, importance of countermeasures against cyber attacks has increased. For example, in ISO 21434 being an international standard relating to cyber security for vehicles, long-term cyber security policies are required more as digitization of control systems for vehicles have progressed.

In the cyber security policies, it is required to collect and analyze information (cyber security information) on threat, vulnerability, and the like. The collection and the analysis of the information are executed by, for example, a product security incident response team (PSIRT).

In recent years, an infrastructure for sharing the cyber security information has been built. There exist systems and tools which automatically collect the cyber security information from this infrastructure. However, it is required to manually determine a value of the collected cyber security information, and there is a problem in that man-hours required for the check are large. Thus, a system which automatically evaluates the cyber security information is required. For this purpose, there are known technologies as described in JP 2019-101672 A and Lei Li, Xiaoyong Li, Y. Gao, "MTIV: A Trustworthiness Determination Approach for Threat Intelligence," Security, Privacy, and Anonymity in Computation, Communication, and Storage, pp. 5-14.

In JP 2019-101672 A, there is a description "A cyber attack information processing program according to an embodiment causes a computer to execute storing processing and updating processing. In the storing processing, when information on a cyber attack is acquired, the information on the cyber attack is stored in a storage unit in association with reliability based on an acquisition source of the information on the cyber attack. In the updating processing, when it is detected that posted information corresponding to the information on the cyber attack is uploaded from an information processing terminal, the reliability associated with the information on the cyber attack is updated in accordance with reliability relating to the posted information."

In Lei Li, Xiaoyong Li, Y. Gao, "MTIV: A Trustworthiness Determination Approach for Threat Intelligence," Security, Privacy, and Anonymity in Computation, Communication, and Storage, pp. 5-14, there is described a method of calculating trustworthiness of information based on similarity in an information source, times such as publication date and time and update date and time, and information.

US 2020/177613 A1 relates to a method for detecting impact of the vulnerability by using a normalizer and correlator. In various implementations, the method includes: accessing a first set of data from a first data sources, calculating a risk level value for each of the first set of data based on a first set of rules, sorting the first set of data based on their risk level, accessing the sorted first set of data by a correlator, accessing, by the correlator, a second set of data from second data sources, correlating each of the sorted first set of data to at least a data of the second set of data based a second set of rules, and calculating a confidence score for each data of the sorted first set of data based on a third set of rules.

EP 3 629 207 A1 relates to a storage unit of a computer including: a product configuration information holding unit; a component-vulnerability correspondence holding unit indicating security holes; an asset information holding unit that stores asset values of the respective components of the product; a security countermeasure classification holding unit that stores defense target components for the respective security countermeasures and coefficients of countermeasure effects; and an attack map holding unit that stores attack maps indicating attack paths. A processing unit executes a program to form an information collection processing unit, an attack map creation processing unit that creates an attack map for each product, and a vulnerability evaluation processing unit that calculates priority order among countermeasures from threat levels of security holes of the respective components based on the asset values.

SUMMARY OF THE INVENTION

It is therefore the object of the present invention to provide an improved evaluation method for cyber security information, and a corresponding computer system.

This object is solved by the subject-matter of the independent claims.

Preferred embodiments are defined in the dependent claims.

Even when the information source is reliable and contents are accurate, in a case in which targets, such as a field and a product, of disclosure targets of the cyber security information are not relevant to targets, such as a field and a product, of analysis targets, the value of the cyber security information is low. For example, in a case in which the disclosure target of the cyber security information is the medical field but the analysis target is the automobile field, even when an information source of this cyber security information is reliable and accurate contents are described, the value is low. Moreover, the same is true for a case in which the disclosure target of the cyber security information is a product A but the analysis target is a product B.

However, in the related art, richness of the contents of the cyber security information is not evaluated in consideration of the target, and hence the information cannot be narrowed down as described above.

This invention is to provide a system and a method which evaluate richness of contents of cyber security information in consideration of a target, and automatically determine a value of the cyber security information.

A representative example of the present invention disclosed in this specification is as follows: a computer system comprises: at least one computer; a freshness evaluation module configured to evaluate freshness of cyber security information; a reliability evaluation module configured to evaluate a level of reliability of an information source of the cyber security information; a richness evaluation module configured to evaluate richness of a content of the cyber security information; and a value evaluation module configured to evaluate a value of the cyber security information based on evaluation results obtained by the freshness evaluation module, the reliability evaluation module, and the richness evaluation module. The richness evaluation module is configured to: identify a target of application of the cyber security information; and evaluate the richness of the content of the cyber security information in the identified target.

According to this invention, it is possible to evaluate the richness of the contents of the cyber security information in consideration of the target, and to automatically determine the value of the cyber security information. Other problems, configurations, and effects than those described above will become apparent in the descriptions of embodiments below.

BRIEF DESCRIPTION OF THE DRAWINGS

The present invention can be appreciated by the description which follows in conjunction with the following figures, wherein:

FIG. 1 is a diagram for illustrating a configuration example of a system according to a first embodiment of this invention;
FIG. 2 is a diagram for illustrating a configuration example of each computer included in the system according to the first embodiment;
FIG. 3 is a flowchart for illustrating an example of registration processing for a structured DB executed by the system according to the first embodiment;
FIG. 4 is a view for illustrating an example of a screen presented by the system according to the first embodiment;
FIG. 5 is a flowchart for illustrating an example of cyber security information evaluation processing executed by the system according to the first embodiment;
FIG. 6 is a view for illustrating an example of a screen presented by the system according to the first embodiment; and
FIG. 7, FIG. 8, and FIG. 9 are tables for showing examples of information to be used by the system according to the first embodiment in the cyber security information evaluation processing.

DETAILED DESCRIPTION OF THE PREFERRED EMBODIMENTS

Now, a description is given of an embodiment of this invention referring to the drawings. It should be noted that this invention is not to be construed by limiting the invention to the content described in the following embodiment. A person skilled in the art would easily recognize that a specific configuration described in the following embodiment may be changed within the scope of the concept and the gist of this invention.

In a configuration of this invention described below, the same or similar components or functions are assigned with the same reference numerals, and a redundant description thereof is omitted here.

Notations of, for example, "first", "second", and "third" herein are assigned to distinguish between components, and do not necessarily limit the number or order of those components.

The position, size, shape, range, and others of each component illustrated in, for example, the drawings may not represent the actual position, size, shape, range, and other metrics in order to facilitate understanding of this invention. Thus, this invention is not limited to the position, size, shape, range, and others described in, for example, the drawings.

[First Embodiment]

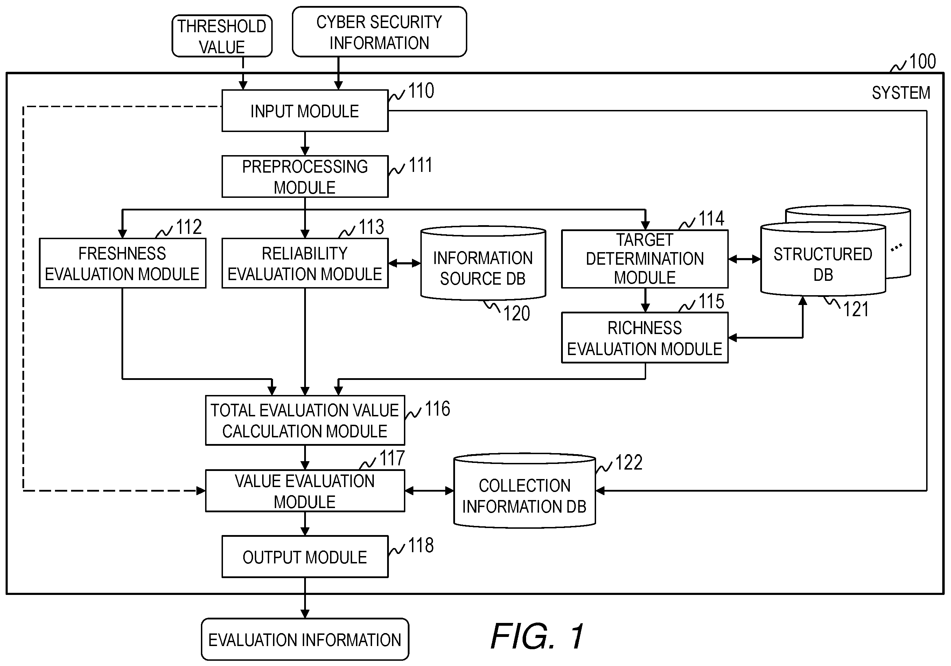

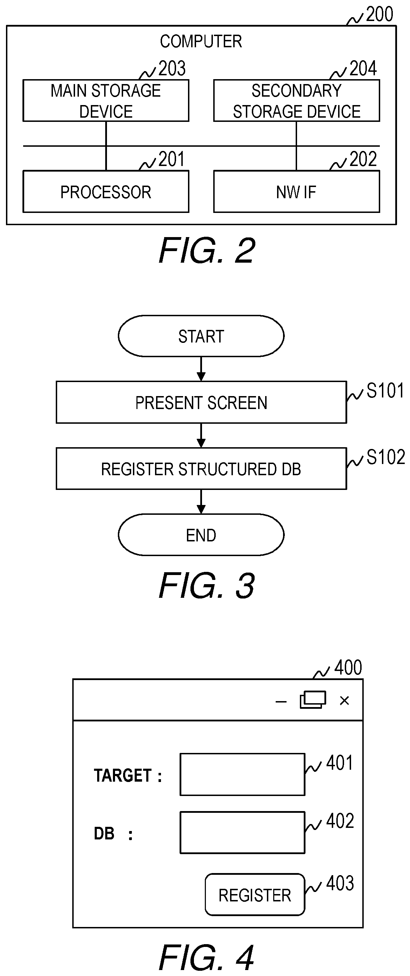

FIG. 1 is a diagram for illustrating a configuration example of a system according to a first embodiment of this invention. FIG. 2 is a diagram for illustrating a configuration example of each computer included in the system according to the first embodiment.

A system 100 is a system which evaluates a value of information collected from information sources (providers) such as SNSs, Webs, and organizations, and is formed of at least one computer 200. The system 100 may include a storage system, a network switch, a gateway, and the like.

In this embodiment, it is assumed that cyber security information is collected. A type and contents of the information to be collected are not limited in this invention.

As illustrated in FIG. 2, the computer 200 includes a processor 201, a network interface 202, a main storage device 203, and a secondary storage device 204. The computer 200 may include an input device such as a keyboard, a mouse, and a touch panel and an output device such as a display.

The processor 201 is an arithmetic device which executes a program stored in the main storage device 203. The processor 201 executes processing in accordance with the program, to thereby operate as a function module (module) for implementing a specific function. In the following description, when the processing is described with a function module as the subject, the description indicates that the processor 201 is executing the program for implementing the function module.

The network interface 202 is an interface for communication to and from an external device via a network.

The main storage device 203 is a storage device which stores programs executed by the processor 201 and information used by the programs, and is, for example, a dynamic random access memory (DRAM). The main storage device 203 is used also as a work area. The secondary storage device 204 is a storage device which permanently stores information, and is, for example, a hard disk drive (HDD), a solid state drive (SSD), or the like.

The programs and information stored in the main storage device 203 may be stored in the secondary storage device 204. In this case, the processor 201 reads out the programs and information from the secondary storage device 204, and loads the programs and information onto the main storage device 203.

The system 100 includes an input module 110, a preprocessing module 111, a freshness evaluation module 112, a reliability evaluation module 113, a target determination module 114, a richness evaluation module 115, a total evaluation value calculation module 116, a value evaluation module 117, and an output module 118. Moreover, the system 100 holds an information source DB 120, a plurality of structured DBs 121, and a collection information DB 122.

The information source DB 120 is a database which manages information on information sources. In the information source DB 120, data including, for example, types of information sources and names and the like of organizations and the like being the information sources is stored. The types of information sources are, for example, the Auto-ISAC and SNS.

The structured DB 121 is a database which manages words used in a target (a field, a product, or the like). In this embodiment, it is assumed that one structured DB 121 exists for one target. The system 100 manages the target and the structured DB 121 in association with each other. In the structured DB 121, data including, for example, words and categories is stored. The categories may have a hierarchical structure such as large categories, medium categories, and small categories. For example, in a case of categories of the security, the larger category is "security," and the medium categories are "attack source," "countermeasure," and the like.

The system 100 may hold a structured DB 121 which belongs to none of the targets.

The collection information DB 122 is a database which manages cyber security information input to the system 100. In the collection information DB 122, for example, cyber security information having an ID assigned thereto is stored.

It is assumed that the cyber security information in this embodiment includes a document formed of character strings. However, the cyber security information may include images and graphs, for example.

The input module 110 receives input of the cyber security information and information to be used for processing such as threshold values. The input module 110 provides an interface for receiving input of the various types of setting information. The input module 110 outputs the cyber security information to the preprocessing module 111, and stores the cyber security information having the ID assigned thereto in the collection information DB 122. The input module 110 outputs the setting information to be used for the processing such as the threshold values to each function module. In FIG. 1, the input module 110 outputs, to the value evaluation module 117, a threshold value for selecting valuable cyber security information.

The preprocessing module 111 executes preprocessing for the cyber security information. The preprocessing is, for example, conversion, formatting, coupling, and normalization of data.

The freshness evaluation module 112 evaluates freshness of the cyber security information based on a date of creation, a date of update, a frequency of update, and the like of the cyber security information, to thereby calculate a freshness evaluation value. The reliability evaluation module 113 evaluates a level of reliability of the information source of the cyber security information based on the information source and the like of the cyber security information, to thereby calculate a reliability evaluation value.

The target determination module 114 determines a target of application of the cyber security information through use of the structured DBs 121. The richness evaluation module 115 evaluates richness of contents of the cyber security information in any target, to thereby calculate a richness evaluation value.

The total evaluation value calculation module 116 calculates a total evaluation value through use of the freshness evaluation value, the reliability evaluation value, and the richness evaluation value. The value evaluation module 117 uses the total evaluation value to select cyber security information having a high value for the target determined by the target determination module 114.

The output module 118 outputs, as evaluation information, information on the cyber security information selected by the value evaluation module 117. The output module 118 provides an interface for displaying the evaluation information.

Regarding the respective function modules of the system 100, a plurality of function modules may be combined into one function module, or one function module may be divided into a plurality of function modules each corresponding to a relevant function. For example, the richness evaluation module 115 may have the function of the target determination module 114. Moreover, the value evaluation module 117 may have the function of the total evaluation value calculation module 116.

A specific description is now given of processing executed by the system 100.

FIG. 3 is a flowchart for illustrating an example of registration processing for the structured DB 121 executed by the system 100 according to the first embodiment. FIG. 4 is a view for illustrating an example of a screen presented by the system 100 according to the first embodiment.

A user uses a terminal or the like to access the system 100, to thereby transmit a registration start request for a structured DB 121. In a case where the input module 110 of the system 100 receives this registration start request, the input module 110 presents a screen 400 of FIG. 4 (Step S101).

The screen 400 includes a target input field 401, a DB input field 402, and a registration button 403. The target input field 401 is a field for inputting a target of the structured DB 121. The DB input field 402 is a field for inputting the structured DB 121. Into the DB input field 402, a file which is a substance of the structured DB 121 or a file path, a URL, or the like of the structured DB 121 is input. The registration button 403 is an operation button for registering the structured DB 121. In a case where the user inputs data into the target input field 401 and the DB input field 402, and operates the registration button 403, a registration request is transmitted to the system 100.

In a case where the input module 110 receives the registration request, the input module 110 registers the structured DB 121 in association with the target (Step S102).

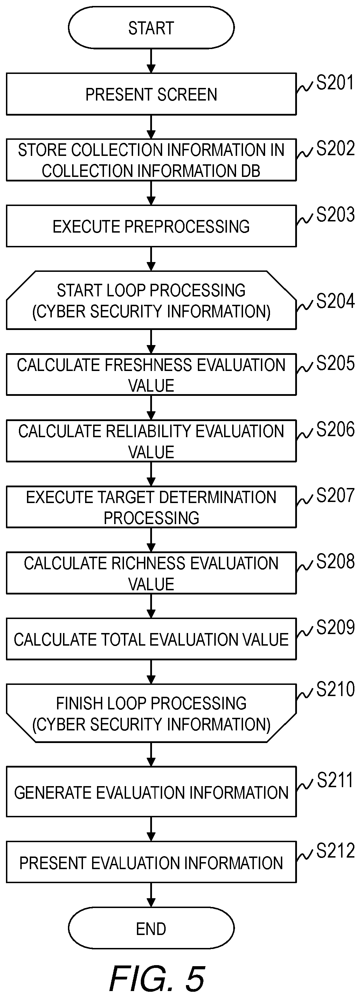

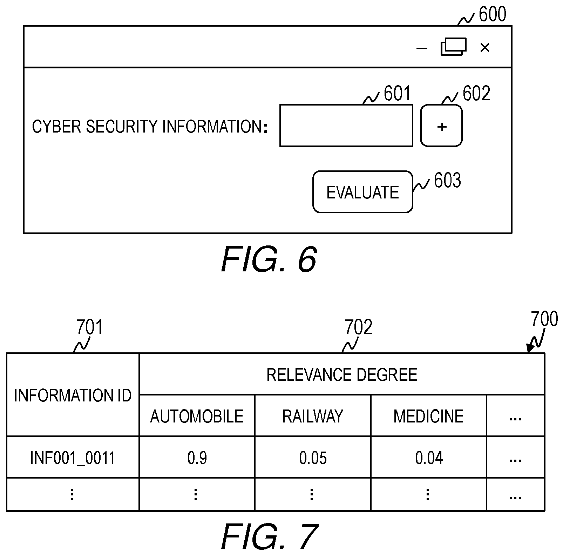

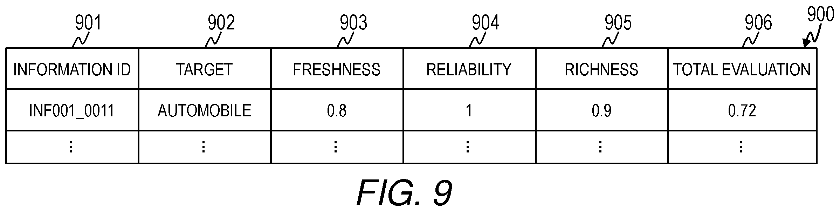

FIG. 5 is a flowchart for illustrating an example of cyber security information evaluation processing executed by the system 100 according to the first embodiment. FIG. 6 is a view for illustrating an example of a screen presented by the system 100 according to the first embodiment. FIG. 7, FIG. 8, and FIG. 9 are tables for showing examples of information to be used by the system 100 according to the first embodiment in the cyber security information evaluation processing.

The user uses a terminal or the like to access the system 100, to thereby transmit an evaluation start request for cyber security information. In a case where the input module 110 of the system 100 receives this evaluation start request, the input module 110 presents a screen 600 of FIG. 6 (Step S201).

The screen 600 includes a cyber security information input field 601, an addition button 602, and an evaluation button 603. The cyber security information input field 601 is a field for inputting the cyber security information to be evaluated. Into the cyber security information input field 601, a file which is a substance of the cyber security information or a file path, a URL, or the like of the cyber security information is input. The addition button 602 is an operation button for adding the cyber security information input field 601. The evaluation button 603 is an operation button for evaluating the cyber security information. In a case where the user inputs data into the cyber security information input field 601, and operates the evaluation button 603, an evaluation request is transmitted to the system 100.

In a case where the input module 110 receives the evaluation request, the input module 110 stores the cyber security information input by the user in the collection information DB 122 (Step S202), and outputs the cyber security information to the preprocessing module 111.

The preprocessing module 111 executes preprocessing for the cyber security information (Step S203). A content of the preprocessing to be executed is not limited in this invention. Moreover, the preprocessing is not required be executed.

After that, loop processing for the cyber security information is started (Step S204). Specifically, the preprocessing module 111 selects one piece of cyber security information, and outputs the selected cyber security information to the freshness evaluation module 112, the reliability evaluation module 113, and the target determination module 114.

The freshness evaluation module 112 calculates a freshness evaluation value $C_1$ indicating the freshness of the cyber security information based on the date of creation, the date of update, the number of times of update, and the like of the cyber security information (Step S205), and outputs the freshness evaluation value $C_1$ to the total evaluation value calculation module 116. As the evaluation method for the freshness, it is only required to use a publicly-known technology, and hence a detailed description thereof is omitted.

The reliability evaluation module 113 calculates a reliability evaluation value $C_2$ indicating the level of the reliability of the information source of the cyber security information based on the information on the information source of the cyber security information and the information source DB 120 (Step S206), and outputs the reliability evaluation value $C_2$ to the total evaluation value calculation module 116. As the evaluation method for the reliability of the information source, it is only required to use a publicly-known technology, and hence a detailed description thereof is omitted.

The target determination module 114 executes target determination processing (Step S207). Specifically, the following processing is executed.

(Step S207-1) The target determination module 114 selects one target, and refers to the structured DB 121 corresponding to this target. At this time, the target determination module 114 registers an entry in intermediate information 700.

The intermediate information 700 stores entries each formed of an information ID 701 and a relevance degree 702. The information ID 701 is a field for storing the ID of the cyber security information. The relevance degree 702 is a field group for storing relevance degrees each indicating relevance of the cyber security information to a target. The relevance degree 702 includes one or more columns of the targets.

At this time point, the correlation degree 702 of the added entry is blank.

(Step S207-2) The target determination module 114 uses the structured DB 121 to analyze documents included in the cyber security information, to thereby extracts topics relating to the selected target. The target determination module 114 calculates the relevance degree indicating the relevance of the cyber security information to the selected target based on the number of extracted topics, contents, and the like. The target determination module 114 refers to the relevance degree 702 of the entry added to the intermediate information 700, and stores the relevance degree in the column of the selected target.

The calculation method for the relevance degree is an example, and the calculation method is not limited to this example. The calculation method may be a method of calculating the relevance degree by inputting documents into a model generated through machine learning.

(Step S207-3) The target determination module 114 determines whether or not the processing is completed for all of the targets. In a case where the processing has not been completed for all of the targets, the process returns to Step S207-1, and the target determination module 114 executes similar processing.

(Step S207-4) In a case where the processing has been completed for all of the targets, the target determination module 114 refers to the intermediate information 700, to thereby select a target having the highest relevance degree, and outputs identification information on the selected target to the richness evaluation module 115. After that, the target determination module 114 finishes the target determination processing.

In a case where there exist a plurality of targets which have large relevance degrees and are different from one another by small amounts, the target determination module 114 may ask the user for selection of the target through the output module 118, or may select the plurality of targets. Moreover, the target determination module 114 may output, to the richness evaluation module 115, a value indicating that the cyber security information belongs to none of the targets.

The user may specify, in advance, a type of targets to be determined by the target determination module 114.

Description has been given of the processing step of Step S207.

The richness evaluation module 115 calculates a richness evaluation value $C_3$ indicating the richness of the contents of the cyber security information in the target selected by the target determination module 114 (Step S208), and outputs the richness evaluation value $C_3$ to the total evaluation value calculation module 116. Specifically, the following processing is executed.

(Step S208-1) The richness evaluation module 115 adds an entry to intermediate information 800.

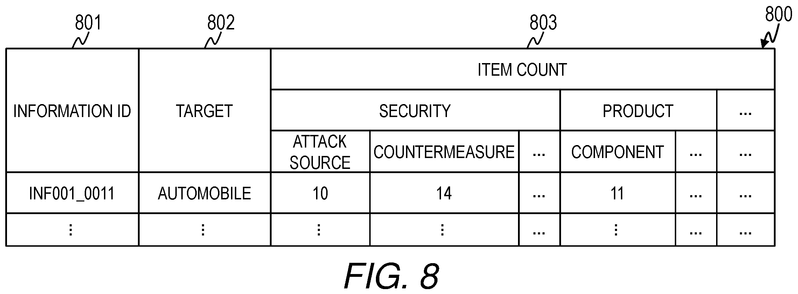

The intermediate information 800 stores entries each formed of an information ID 801, a target 802, and an item count 803. One entry exists for a combination of the cyber security information and the target. The information ID 801 is a field for storing the ID of the cyber security information. The target 802 is a field for storing identification information on the target. In the target 802, a name, an identification number, or the like of the target is stored. The item count 803 is a field group for storing numbers of items relevant to the target in the cyber security information. In the item count 803, the number of items is managed for each category. When the category is hierarchical, the numbers of items is managed in each intermediate category as a unit or each small category as a unit. In the intermediate information 800 of FIG. 8, the numbers of items are managed in each intermediate category as a unit.

At this time point, the item count 803 of the added entry is blank.

In a case where a plurality of targets are input, the richness evaluation module 115 adds as many entries as the number of targets.

(Step S208-2) The richness evaluation module 115 uses the structured DB 121 corresponding to the selected target to count the number of items (character strings such as words) in each category, and stores the number in the item count 803 of the entry of the intermediate information 800.

(Step S208-3) The richness evaluation module 115 calculates the richness evaluation value $C_3$ based on the number of items in each category. For example, Expression (1) is used to calculate the richness evaluation value $C_3$.
[Expression 1]

$$C_3 = \sum_i p_i \frac{N_i}{A_i} \cdots (1)$$

In this expression, "i" is a character indicating the type of the category. In this embodiment, it is assumed that an integer is assigned to each category. $N_i$ represents a total number of words in the category "i" registered in the structured DB 121. $A_i$ represents the number of words in the category "i" included in the cyber security information. The symbol $p_i$ represents a weight for the category "i." It is assumed that the weight $p_i$ is set in advance. The user can set the weight $p_i$ to

any value. It is possible to adjust the weight, to thereby evaluate the richness of the content of the cyber security information relating to a category of interest. In a case where the number of categories is two, any "p" may be used to set $p_1$ to $p$, and $p_2$ to $1-p$.

In a case where a plurality of targets are selected, the richness of the contents of the cyber security information is calculated for each of the targets. In this case, the richness evaluation module 115 outputs the richness evaluation value $C_3$ along with the identification information on each target.

In a case where the value indicating that the cyber security information belongs to none of the targets is input, the richness evaluation module 115 uses the structured DB 121 depending on none of the targets to calculate the richness evaluation value $C_3$.

Description has been given of the processing step of Step S208.

In a case where the freshness evaluation value $C_1$, the reliability evaluation value $C_2$, and the richness evaluation value $C_3$ are input, the total evaluation value calculation module 116 calculates a total evaluation value (Step S209). Specifically, the following processing is executed.

(Step S209-1) The total evaluation value calculation module 116 adds an entry to intermediate information 900.

The intermediate information 900 stores entries each formed of an information ID 901, a target 902, a freshness 903, a reliability 904, a richness 905, and a total evaluation 906. One entry exists for a combination of the cyber security information and the target. The information ID 901 is a field for storing the ID of the cyber security information. The target 902 is a field for storing identification information on the target. The freshness 903 is a field for storing the freshness evaluation value $C_1$. The reliability 904 is a field for storing the reliability evaluation value $C_2$. The richness 905 is a field for storing the richness evaluation value $C_3$. The total evaluation 906 is a field for storing the total evaluation value.

At this time point, the total evaluation 906 of the added entry of the intermediate information 900 is blank.

In a case where a plurality of richness evaluation values $C_3$ associated with the identification information on the targets are input, as many entries as the number of targets are added.

(Step S209-2) The total evaluation value calculation module 116 uses, for example, Expression (2) to calculate the total evaluation value, and stores the total evaluation value in the total evaluation 906 of the added entry.

[Expression 2]

$$\text{Total evaluation value} = (C_1 \times C_2 \times C_3) \times q \cdots (2)$$

In this expression, "q" represents a weight. It is assumed that the weight "q" is set in advance. The user can set the weight "q" to any value.

(Step S209-3) The total evaluation value calculation module 116 notifies the preprocessing module 111 of the completion of the processing.

Description has been given of the processing step of Step S209.

In a case where the preprocessing module 111 receives the notification from the total evaluation value calculation module 116, the preprocessing module 111 determines whether or not the processing has been completed for all of the pieces of cyber security information input by the user (Step S210).

In a case where the processing has not been completed for all of the pieces of cyber security information input by the user, the process returns to Step S204, and the preprocessing module 111 executes similar processing. In a case where the processing has been completed for all of the pieces of cyber security information input by the user, the preprocessing module 111 instructs the total evaluation value calculation module 116 to output the intermediate information 900. The total evaluation value calculation module 116, which has received this instruction, outputs the intermediate information 900 to the value evaluation module 117.

In a case where the intermediate information 900 is input, the value evaluation module 117 generates the evaluation information based on the intermediate information 900 (Step S211), and outputs the evaluation information to the output module 118. Specifically, the following processing is executed.

(Step S211-1) The value evaluation module 117 selects one target.

(Step S211-2) The value evaluation module 117 searches for an entry of the intermediate information 900 that stores, in the target 902, the identification information on the selected target.

(Step S211-3) The value evaluation module 117 compares the total evaluation value stored in the total evaluation 906 of the retrieved entry and the threshold value with each other, to thereby determine whether or not the cyber security information corresponding to the retrieved entry has a high value in the target corresponding to the retrieved entry. For example, in a case where the total evaluation value is larger than the threshold value, the value evaluation module 117 determines that the value of the cyber security information is high in the target. The value evaluation module 117 deletes, from the intermediate information 900, entries of the cyber security information each having a low value. The value evaluation module 117 is not required to delete the entry. It is possible to reconsider data included in cyber security information by presenting that the value of this cyber security information is low for a certain target.

(Step S211-4) The value evaluation module 117 determines whether or not the processing is completed for all of the targets.

In a case where the processing has not been completed for all of the targets, the process returns to Step S211-1, and the value evaluation module 117 executes similar processing. In a case where the processing has been completed for all of the targets, the value evaluation module 117 generates the intermediate information 900 as the evaluation information.

Description has been given of the processing step of Step S211.

When the evaluation information is input, the output module 118 presents the evaluation information to the user (Step S212).

The processing steps of Step S205, Step S206, Step S207, and Step S208 may be executed in a different order or in parallel.

The user can identify cyber security information having high values for the intended targets by referring the evaluation information. Moreover, the user can recognize for which target each piece of cyber security information is valuable by referring the evaluation information.

For example, when technical fields are set as the targets, the user can recognize the value of cyber security information for each of the technical fields. Moreover, the user can identify cyber security information having a high value in a specific technical field. For example, when products are set as the targets, the user can recognize the value of cyber security information for each of the products. Moreover, the user can identify cyber security information having a high value for a specific product.

According to this embodiment, it is possible to more accurately recognize the value of cyber security information to classify the cyber security information by identifying a target in which the cyber security information is to be evaluated and evaluating the richness of contents of the cyber security information in this target.

In a case of a system for classifying cyber security information to be analyzed, it is possible to narrow down cyber security information to cyber security information in a specific field, thereby being able to reduce man-hours required for the analysis.

The present invention is not limited to the above embodiment and includes various modification examples. In addition, for example, the configurations of the above embodiment are described in detail so as to describe the present invention comprehensibly. The present invention is not necessarily limited to the embodiment that is provided with all of the configurations described. In addition, a part of each configuration of the embodiment may be removed, substituted, or added to other configurations.

A part or the entirety of each of the above configurations, functions, processing units, processing means, and the like may be realized by hardware, such as by designing integrated circuits therefor. In addition, the present invention can be realized by program codes of software that realizes the functions of the embodiment. In this case, a storage medium on which the program codes are recorded is provided to a computer, and a CPU that the computer is provided with reads the program codes stored on the storage medium. In this case, the program codes read from the storage medium realize the functions of the above embodiment, and the program codes and the storage medium storing the program codes constitute the present invention. Examples of such a storage medium used for supplying program codes include a flexible disk, a CD-ROM, a DVD-ROM, a hard disk, a solid state drive (SSD), an optical disc, a magneto-optical disc, a CD-R, a magnetic tape, a non-volatile memory card, and a ROM.

The program codes that realize the functions written in the present embodiment can be implemented by a wide range of programming and scripting languages such as assembler, C/C++, Perl, shell scripts, PHP, Python and Java.

It may also be possible that the program codes of the software that realizes the functions of the embodiment are stored on storing means such as a hard disk or a memory of the computer or on a storage medium such as a CD-RW or a CD-R by distributing the program codes through a network and that the CPU that the computer is provided with reads and executes the program codes stored on the storing means or on the storage medium.

In the above embodiment, only control lines and information lines that are considered as necessary for description are illustrated, and all the control lines and information lines of a product are not necessarily illustrated. All of the configurations of the embodiment may be connected to each other.

**Claims**

1. A computer system (100), comprising:

   at least one computer (200);
   a freshness evaluation module (112) configured to evaluate freshness of cyber security information;
   a reliability evaluation module (113) configured to evaluate a level of reliability of an information source of the cyber security information;

a richness evaluation module (115) configured to evaluate richness of a content of the cyber security information; and

a value evaluation module (117) configured to evaluate a value of the cyber security information based on evaluation results obtained by the freshness evaluation module (112), the reliability evaluation module (113), and the richness evaluation module (115),

the richness evaluation module (115) being configured to:

identify a target (902) of application of the cyber security information;

evaluate the richness (905) of the content of the cyber security information in the identified target,

calculate a relevance degree (702) indicating relevance of the cyber security information to each of a plurality of targets (902); and

identify the target (902) based on the relevance degree (702) of each of the plurality of targets (902); and wherein

the computer system (100) is configured to access a database (121) which stores a character string relevant to each of the plurality of targets (902), and

the richness evaluation module (115) is configured to evaluate the richness (905) of the content of the cyber security information in the identified target (902) by referring to the database (121) to extract the character string which is included in the cyber security information and is relevant to the identified target (902).

2. The computer system (100) according to claim 1, wherein the value evaluation module (117) is configured to:

calculate a total evaluation value (906) indicating a value of the cyber security information based on the evaluation results obtained by the freshness evaluation module (112), the reliability evaluation module (113), and the richness evaluation module (115); and

select the cyber security information to be presented to a user based on the total evaluation value (906).

3. An evaluation method for cyber security information, which is executed by a computer system (100) including at least one computer (200), the evaluation method including:

a first step of evaluating, by the at least one computer (200), freshness (903) of cyber security information;

a second step of evaluating, by the at least one computer (200), a level of reliability (904) of an information source of the cyber security information;

a third step of evaluating, by the at least one computer (200), richness (905) of a content of the cyber security information; and

a fourth step of evaluating, by the at least one computer (200), a value of the cyber security information based on evaluation results of the freshness (903) of the cyber security information, the level of the reliability (904) of the information source of the cyber security information, and the richness (905) of the content of the cyber security information,

wherein the third step includes:

a fifth step of identifying, by the at least one computer (200), a target (902) of application of the cyber security information; and

a sixth step of evaluating, by the at least one computer (200), the richness (905) of the content of the cyber security information in the identified target (902), wherein the fifth step includes the steps of:

calculating, by the at least one computer (200), a relevance degree (702) indicating relevance of the cyber security information to each of a plurality of targets (902); and

identifying, by the at least one computer (200), the target (902) based on the relevance degree (702) of each of the plurality of targets (902), and accessing, by the computer system (100), a database (121) which stores a character string relevant to each of the plurality of targets (902), and

wherein the third step includes a step of evaluating, by the at least one computer (200), the richness (905) of the content of the cyber security information in the identified target (902) by referring to the database (121) to extract the character string which is included in the cyber security information and is relevant to the identified target (902).

4. The evaluation method for cyber security information according to claim 3, wherein the fourth step includes the steps of:

calculating, by the at least one computer (200), a total evaluation value (906) indicating a value of the cyber security information based on the evaluation results of the freshness (903) of the cyber security information, the level of the reliability (904) of the information source of the cyber security information, and the richness (905) of the content of the cyber security information; and

selecting, by the at least one computer (200), the cyber security information to be presented to a user based on the total evaluation value (906).

**Patentansprüche**

1. Computersystem (100), das Folgendes umfasst:

   mindestens einen Computer (200);
   ein Neuheitsbeurteilungsmodul (112), das konfiguriert ist, die Neuheit von Cyber-Sicherheitsinformationen zu beurteilen;
   ein Zuverlässigkeitsbeurteilungsmodul (113), das konfiguriert ist, einen Grad der Zuverlässigkeit einer Informationsquelle der Cyber-Sicherheitsinformationen zu beurteilen;
   ein Reichhaltigkeitsbeurteilungsmodul (115), das konfiguriert ist, die Reichhaltigkeit eines Inhalts der Cyber-Sicherheitsinformationen zu beurteilen; und
   ein Wertbeurteilungsmodul (117), das konfiguriert ist, einen Wert der Cyber-Sicherheitsinformationen auf der Grundlage von Beurteilungsergebnissen zu beurteilen, die durch das Neuheitsbeurteilungsmodul (112), das Zuverlässigkeitsbeurteilungsmodul (113) und das Reichhaltigkeitsbeurteilungsmodul (115) erhalten wurden, wobei
   das Reichhaltigkeitsbeurteilungsmodul (115) konfiguriert ist zum:

      Identifizieren eines Ziels (902) der Anwendung der Cyber-Sicherheitsinformationen;
      Beurteilen der Reichhaltigkeit (905) des Inhalts der Cyber-Sicherheitsinformationen im identifizierten Ziel,
      Berechnen eines Relevanzgrads (702), der eine Relevanz der Cyber-Sicherheitsinformationen angibt, für jedes von mehreren Zielen (902) und
      Identifizieren des Ziels (902) auf der Grundlage des Relevanzgrads (702) jedes der mehreren Ziele (902); wobei
      das Computersystem (100) konfiguriert ist, auf eine Datenbank (121) zuzugreifen, die eine Zeichenfolge speichert, die für jedes der mehreren Ziele (902) relevant ist, und
      das Reichhaltigkeitsbeurteilungsmodul (115) konfiguriert ist, die Reichhaltigkeit (905) des Inhalts der Cyber-Sicherheitsinformationen im identifizierten Ziel (902) unter Bezugnahme auf die Datenbank (121), um die Zeichenfolge zu extrahieren, die in den Cyber-Sicherheitsinformationen enthalten ist und für das identifizierte Ziel (902) relevant ist, zu beurteilen.

2. Computersystem (100) nach Anspruch 1, wobei das Wertbeurteilungsmodul (117) konfiguriert ist zum:

   Berechnen eines Gesamtbeurteilungswerts (906), der einen Wert der Cyber-Sicherheitsinformationen angibt, auf der Grundlage der Beurteilungsergebnisse, die durch das Neuheitsbeurteilungsmodul (112), das Zuverlässigkeitsbeurteilungsmodul (113) und das Reichhaltigkeitsbeurteilungsmodul (115) erhalten wurden; und
   Wählen der Cyber-Sicherheitsinformationen, die für einen Anwender dargestellt werden sollen, auf der Grundlage des Gesamtbeurteilungswerts (906).

3. Beurteilungsverfahren für Cyber-Sicherheitsinformationen, das durch ein Computersystem (100), das mindestens einen Computer (200) enthält, ausgeführt wird, wobei das Beurteilungsverfahren Folgendes umfasst:

   einen ersten Schritt des Beurteilens durch den mindestens einen Computer (200) der Neuheit (903) von Cyber-Sicherheitsinformationen;
   einen zweiten Schritt des Beurteilens durch den mindestens einen Computer (200) eines Zuverlässigkeitsgrads (904) einer Informationsquelle der Cyber-Sicherheitsinformationen;
   einen dritten Schritt des Beurteilens durch den mindestens einen Computer (200) der Reichhaltigkeit (905) eines Inhalts der Cyber-Sicherheitsinformationen und einen vierten Schritt des Beurteilens durch den mindestens einen Computer (200) eines Werts der Cyber-Sicherheitsinformationen auf der Grundlage von Beurteilungsergebnissen der Neuheit (903) der Cyber-Sicherheitsinformationen, des Grads der Zuverlässigkeit (904) der Informationsquelle der Cyber-Sicherheitsinformationen und der Reichhaltigkeit (905) des Inhalts der Cyber-Sicherheitsinformationen,

wobei der dritte Schritt Folgendes umfasst:

einen fünften Schritt des Identifizierens durch den mindestens einen Computer (200) eines Ziels (902) einer Anwendung der Cyber-Sicherheitsinformationen und

einen sechsten Schritt des Beurteilens durch den mindestens einen Computer (200) der Reichhaltigkeit (905) des Inhalts der Cyber-Sicherheitsinformationen im identifizierten Ziel (902), wobei der fünfte Schritt die folgenden Schritte umfasst:

Berechnen durch den mindestens einen Computer (200) eines Relevanzgrads (702), der eine Relevanz der Cyber-Sicherheitsinformationen angibt, für jedes von mehreren Zielen (902);

Identifizieren durch den mindestens einen Computer (200) des Ziels (902) auf der Grundlage des Relevanzgrads (702) jedes der mehreren Ziele (902) und

Zugreifen durch das Computersystem (100) auf eine Datenbank (121), die eine Zeichenfolge speichert, die für jedes der mehreren Ziele (902) relevant ist,

wobei der dritte Schritt einen Schritt des Beurteilens durch den mindestens einen Computer (200) der Reichhaltigkeit (905) des Inhalts der Cyber-Sicherheitsinformationen im identifizierten Ziel (902) unter Bezugnahme auf die Datenbank (121), um die Zeichenfolge zu extrahieren, die in den Cyber-Sicherheitsinformationen enthalten ist und für das identifizierte Ziel (902) relevant ist, umfasst.

4. Beurteilungsverfahren für Cyber-Sicherheitsinformationen nach Anspruch 3, wobei der vierte Schritt die folgenden Schritte umfasst:

Berechnen durch den mindestens einen Computer (200) eines Gesamtbeurteilungswerts (906), der einen Wert der Cyber-Sicherheitsinformationen angibt, auf der Grundlage der Beurteilungsergebnisse der Neuheit (903) der Cyber-Sicherheitsinformationen, des Niveaus der Zuverlässigkeit (904) der Informationsquelle der Cyber-Sicherheitsinformationen und der Reichhaltigkeit (905) des Inhalts der Cyber-Sicherheitsinformationen und Wählen durch den mindestens einen Computer (200) der Cyber-Sicherheitsinformationen, die für einen Anwender dargestellt werden sollen, auf der Grundlage des Gesamtbeurteilungswerts (906).

## Revendications

1. Système d'ordinateur (100), comprenant :

au moins un ordinateur (200) ;

un module d'évaluation de fraîcheur (112) configuré pour évaluer une fraîcheur d'informations de cybersécurité ;

un module d'évaluation de fiabilité (113) configuré pour évaluer un niveau de fiabilité d'une source d'informations des informations de cybersécurité ;

un module d'évaluation de richesse (155) configuré pour évaluer une richesse d'un contenu des informations de cybersécurité ; et

un module d'évaluation de valeur (117) configuré pour évaluer une valeur des informations de cybersécurité sur la base de résultats d'évaluation obtenus par le module d'évaluation de fraîcheur (112), le module d'évaluation de fiabilité (113), et le module d'évaluation de richesse (115),

le module d'évaluation de richesse (115) étant configuré pour :

identifier une cible (902) d'application des informations de cybersécurité ;

évaluer la richesse (905) du contenu des informations de cybersécurité dans la cible identifiée,

calculer un degré de pertinence (702) indiquant une pertinence des informations de cybersécurité pour chacune d'une pluralité de cibles (902) ; et

identifier la cible (902) sur la base du degré de pertinence (702) de chacune de la pluralité de cibles (902) ; et dans lequel

le système d'ordinateur (100) est configuré pour accéder à une base de données (121) qui stocke une chaîne de caractères pertinente pour chacune de la pluralité de cibles (902), et

le module d'évaluation de richesse (115) est configuré pour évaluer la richesse (905) du contenu des informations de cybersécurité dans la cible identifiée (902) en se référant à la base de données (121) pour extraire la chaîne de caractères qui est incluse dans les informations de cybersécurité et qui est pertinente pour la cible identifiée (902).

**2.** Système d'ordinateur (100) selon la revendication 1, dans lequel le module d'évaluation de valeur (117) est configuré pour :

calculer une valeur d'évaluation totale (906) indiquant une valeur des informations de cybersécurité sur la base des résultats d'évaluation obtenus par le module d'évaluation de fraîcheur (112), le module d'évaluation de fiabilité (113), et le module d'évaluation de richesse (115) ; et

sélectionner les informations de cybersécurité devant être présentées à un utilisateur sur la base de la valeur d'évaluation totale (906).

**3.** Procédé d'évaluation d'informations de cybersécurité, qui est exécuté par un système d'ordinateur (100) incluant au moins un ordinateur (200), le procédé d'évaluation incluant :

une première étape consistant à évaluer, via ledit au moins un ordinateur (200), une fraîcheur (903) d'informations de cybersécurité ;

une deuxième étape consistant à évaluer, via ledit au moins un ordinateur (200), un niveau de fiabilité (904) d'une source d'informations des informations de cybersécurité ;

une troisième étape consistant à évaluer, via ledit au moins un ordinateur (200), une richesse (905) d'un contenu des informations de cybersécurité ; et

une quatrième étape consistant à évaluer, via ledit au moins un ordinateur (200), une valeur des informations de cybersécurité sur la base de résultats d'évaluation de la fraîcheur (903) des informations de cybersécurité, du niveau de fiabilité (904) de la source d'informations des informations de cybersécurité, et de la richesse (905) du contenu des informations de cybersécurité,

dans lequel la troisième étape inclut :

une cinquième étape consistant à identifier, via ledit au moins un ordinateur (200), une cible (902) d'application des informations de cybersécurité ; et

une sixième étape consistant à évaluer, via ledit au moins un ordinateur (200), la richesse (905) du contenu des informations de sécurité dans la cible identifiée (902), la cinquième étape incluant les étapes consistant à :

calculer, via ledit au moins un ordinateur (200), un degré de pertinence (702) indiquant une pertinence des informations de cybersécurité pour chacune d'une pluralité de cibles (902) ; et

identifier, via ledit au moins un ordinateur (200), la cible (902) sur la base du degré de pertinence (702) de chacune de la pluralité de cibles (902), et

accéder, via ledit système d'ordinateur (100), à une base de données (121) qui stocke une chaîne de caractères pertinente pour chacune de la pluralité de cibles (902), et

dans lequel la troisième étape inclut une étape consistant à évaluer, via ledit au moins un ordinateur (200), la richesse (905) du contenu des informations de cybersécurité dans la cible identifiée (902) en se référant à la base de données (121) pour extraire la chaîne de caractères qui est incluse dans les informations de cybersécurité et qui est pertinente pour la cible identifiée (902).

**4.** Procédé d'évaluation d'informations de cybersécurité selon la revendication 3, dans lequel la quatrième étape inclut les étapes consistant à :

calculer, via ledit au moins un ordinateur (200), une valeur d'évaluation totale (906) indiquant une valeur des informations de cybersécurité sur la base des résultats d'évaluation de la fraîcheur (903) des informations de cybersécurité, du niveau de fiabilité (904) de la source d'informations des informations de cybersécurité, et de la richesse (905) du contenu des informations de cybersécurité ; et

sélectionner, via ledit au moins un ordinateur (200), les informations de cybersécurité devant être présentées à un utilisateur sur la base de la valeur d'évaluation totale (906).

*FIG. 1*

EP 4 350 549 B1

~200

COMPUTER

~203
MAIN STORAGE
DEVICE

~204
SECONDARY
STORAGE DEVICE

~201
PROCESSOR

~202
NW IF

*FIG. 2*

START

PRESENT SCREEN ~S101

REGISTER STRUCTURED DB ~S102

END

*FIG. 3*

~400

− ☐ ×

TARGET : ~401

DB : ~402

REGISTER ~403

*FIG. 4*

START

PRESENT SCREEN — S201

STORE COLLECTION INFORMATION IN COLLECTION INFORMATION DB — S202

EXECUTE PREPROCESSING — S203

START LOOP PROCESSING (CYBER SECURITY INFORMATION) — S204

CALCULATE FRESHNESS EVALUATION VALUE — S205

CALCULATE RELIABILITY EVALUATION VALUE — S206

EXECUTE TARGET DETERMINATION PROCESSING — S207

CALCULATE RICHNESS EVALUATION VALUE — S208

CALCULATE TOTAL EVALUATION VALUE — S209

FINISH LOOP PROCESSING (CYBER SECURITY INFORMATION) — S210

GENERATE EVALUATION INFORMATION — S211

PRESENT EVALUATION INFORMATION — S212

END

*FIG. 5*

~ 600

| | − ▢ ✕ |

~ 601    ~ 602

CYBER SECURITY INFORMATION： [        ]    [ + ]

[ EVALUATE ] ~ 603

## FIG. 6

701                        702                        700

| INFORMATION ID | RELEVANCE DEGREE | | | |
|---|---|---|---|---|
| | AUTOMOBILE | RAILWAY | MEDICINE | ... |
| INF001_0011 | 0.9 | 0.05 | 0.04 | ... |
| ⋮ | ⋮ | ⋮ | ⋮ | ... |

## FIG. 7

| INFORMATION ID | TARGET | ITEM COUNT | | | | | |
| | | SECURITY | | | PRODUCT | | ... |
| | | ATTACK SOURCE | COUNTERMEASURE | ... | COMPONENT | ... | ... |
| INF001_0011 | AUTOMOBILE | 10 | 14 | ... | 11 | ... | ... |
| ⋮ | ⋮ | ⋮ | ⋮ | ... | ⋮ | ... | ... |

801 802 803 800

FIG. 8

| INFORMATION ID | TARGET | FRESHNESS | RELIABILITY | RICHNESS | TOTAL EVALUATION |
|---|---|---|---|---|---|
| INF001_0011 | AUTOMOBILE | 0.8 | 1 | 0.9 | 0.72 |
| ⋮ | ⋮ | ⋮ | ⋮ | ⋮ | ⋮ |

901  902  903  904  905  906  900

## FIG. 9

**REFERENCES CITED IN THE DESCRIPTION**

**Patent documents cited in the description**

- JP 2021087011 A
- JP 2019101672 A
- US 2020177613 A1
- EP 3629207 A1

**Non-patent literature cited in the description**

- **LEI LI** ; **XIAOYONG LI** ; **Y. GAO**. MTIV: A Trustworthiness Determination Approach for Threat Intelligence. *Security, Privacy, and Anonymity in Computation, Communication, and Storage*, 5-14